(19) Europäisches Patentamt
European Patent Office
Office européen des brevets

(11) Publication number: **0 448 997 A2**

## (12) EUROPEAN PATENT APPLICATION

(21) Application number: **91103391.8**

(51) Int. Cl.5: **C09K 5/00**

(22) Date of filing: **06.03.91**

(30) Priority: **07.03.90 JP 57772/90**

(43) Date of publication of application:
**02.10.91 Bulletin 91/40**

(84) Designated Contracting States:
**DE FR GB IT**

(71) Applicant: **DAIKIN INDUSTRIES, LIMITED**
**Umeda Center Building, 4-12, Nakazaki-nishi**
**2-chome, Kita-ku**
**Osaka-shi, Osaka-fu(JP)**

(72) Inventor: **Omure, Yukio, c/o**
**Yodogawa-Seisakusho of**
**Daikin Industries, Ltd., 1-1, Nishihitotsuya**
**Settsu-shi, Osaka-fu(JP)**
Inventor: **Noguchi, Masahiro, c/o**
**Yodogawa-Seisakusho of**
**Daikin Industries, Ltd., 1-1, Nishihitotsuya**
**Settsu-shi, Osaka-fu(JP)**

(74) Representative: **Schüler, Horst, Dr.**
**Patentanwalt, Kaiserstrasse 69**
**W-6000 Frankfurt/Main 1(DE)**

(54) **Refrigerant.**

(57) The present invention provides:
(1) a refrigerant for low-temperature refrigerators which comprises 1,1,1-trifluoroethane;
(2) a refrigerator using a refrigerant having an evaporating temperature of - 30 to - 60°C therein, the refrigerator being characterized in that the refrigerant comprises 1,1,1-trifluoroethane; and
(3) a refrigerating method which is carried out with use of a refrigerator using a refrigerant having an evaporating temperature of - 30 to - 60°C, the method being characterized in that the refrigerant comprises 1,1,1-trifluoroethane.

EP 0 448 997 A2

Field of the Invention

The present invention relates to a refrigerant, and more specifically to a refrigerant suited for use in low-temperature refrigerators.

Description of the Prior Art

Hydrochlorofluorocarbons, hydrofluorocarbons, azeotropic compositions thereof and like compositions are known as working fluids or refrigerants. Among them, R-11 (trichlorofluoromethane), R-12 (dichlorodifluoromethane), R-502 (R-22 + chloropentafluoroethane (R-115)), etc. are conventionally used as working fluids for refrigerators. In recent years, however, it has been suggested that some hydrogen-free hydrochlorofluorocarbons, when released into the atmosphere, would deplete the stratospheric ozone layer, thereby inflicting a serious adverse influence on the ecosystem including humans on the earth. In view of the problem, a worldwide agreement calls for the restriction of consumption and production of the aforementioned major ozone-depleting hydrogen-free hydrochlorofluorocarbons. Among the hydrogen-free hydrochlorofluorocarbons to be controlled for the restriction are R-11, R-12, R-502 and the like all of which are widely used as mentioned above. With the spread of refrigerators and air-conditioning systems, the use and production of those refrigerants are enjoying an annually increasing demand. However, the control over those refrigerants will greatly affect our residential environment and the current social framework as a whole. Consequently, there is an urgent demand for development of a novel refrigerant which has no or little potential to cause the problem of depleting the stratospheric ozone layer.

However, it is believed that the development of refrigerants of the universal type such as R-11, R-12 or the like is practically impossible, and therefore it will be unavoidable to develop specific refrigerants useful for specific applications respectively.

Detailed Description of the Invention

We conducted extensive research to find out a refrigerant suited for specific use, i.e. for use in low-temperature refrigerators, and of course, to obtain a novel refrigerant which would exert little or no influence on the stratospheric ozone layer, when released into the atmosphere. It has been found that 1,1,1-trifluoroethane can surprisingly satisfy the foregoing requirements.

The present invention provides a refrigerant comprising 1,1,1-trifluoroethane for use in low-temperature refrigerators.

The major properties of 1,1,1-trifluoroethane (hereinafter referred to as "R-143a") employed in the present invention are as follows:

| | |
|---|---|
| Boiling point | $- 48\,°C$ |
| Critical temperature | $73.2\,°C$ |
| Critical pressure | $38.3\ kg/cm^{2}·a$ |
| Molecular weight | $84$ |

The term "refrigerant for use in low-temperature refrigerators" used herein refers to those which evaporate at a temperature of - 30 to - 60°C in a refrigerator. R-143a, employed as the refrigerant, can be optionally mixed with a stabilizer. More specifically, when severe conditions require a high stability, a refrigerant can be mixed with a stabilizer in an amount of about 0.01 to about 5% by weight of the working fluid. Examples of the stabilizers include epoxides such as propylene oxide, 1,2-butylene oxide and glycidol; phosphites such as dimethylphosphite, diisopropylphosphite and diphenylphosphite; thiophosphites such as trilauryltrithiophosphite; phosphinsulfides such as triphenoxyphosphinsulfide and trimethylphosphinsulfide; boron compounds such as boric acid, triethyl borate, triphenyl borate, phenylboric acid and diphenylboric acid; phenols such as 2,6-di-tert·butyl-p-cresol; nitroalkanes such as nitromethane and nitroethane; acrylic acid esters such as methyl acrylate, ethyl acrylate; and other stabilizers such as dioxane, tert·butanol, pentaerythritol and p-isopropenyl toluene.

R-143a can be optionally mixed with other compounds within the contemplated objects and results of the invention. Such compounds include refrigerants such as R-22, R-23, R-32, R-124, R-125, R-134, R-134a, R-142b and R-152a; ethers such as pentafluorodimethyl ether; and amines such as perfluoroethylamine.

R-143a employed in the present invention is readily decomposed and contains neither chlorine atom nor bromine atom which adversely affect the ozone layer, hence free of the ozone layer depletion problem.

As is clear from the data shown hereinafter in Table 1, R-143a is the best balanced refrigerant for use in a low-temperature refrigerator in terms of cooling capacity, coefficiency of performance, temperature of discharged gas and other properties.

Further, since R-143a has a low solubility against macromolecular compounds, it can be advantageously used in conventional refrigerators without replacement of the current materials.

Moreover, since R-143a is excellent in thermal stability and is little combustible, it can be neatly used in current refrigerators.

Examples are described below to clarify the features of the present invention in detail.

Example 1

A one-horse power refrigerator was operated using R-143a as a refrigerant under the conditions of a refrigerant-evaporating temperature of - 45°C, condensing temperature of 55°C, superheat degree of 5°C and supercool degree of 0°C in the ccndenser.

Table 1 shows (I) the coefficiency of performance, (II) the cooling capacity (kcal/m$^3$), (III) the evaporative pressure (kg/cm$^2$•a), (IV) the discharge pressure (kg/cm$^2$•a) and (V) the temperature of discharged gas (°C) under each condition.

Table 1 also shows (VI) the boiling point (°C) of the refrigerants used in Example 1 and the following Comparison Example.

Comparison Example 1

A refrigerator was operated by the same procedure as in Example 1 with the exception of using other refrigerants instead of R-143a. The results are also shown in Table 1.

3

Table 1

| Refrigerant | I. Coefficiency of performance | II. Cooling capacity (kcal/m³) | III. Evaporative pressure (kg/cm²·a) | IV. Discharge pressure (kg/cm²·a) | V. Temperature of discharged gas (°C) | VI. Boiling point (°C) |
|---|---|---|---|---|---|---|
| R-143a | 1.02 | 96 | 1.15 | 25.7 | 78 | -48 |
| R-502 | 1.05 | 94 | 1.05 | 23.8 | 81 | -45.6 |
| R-32 | 1.27 | 189 | 1.43 | 35.9 | 167 | -52 |
| R-125 | 0.80 | 88 | 1.20 | 28.3 | 78 | -48 |
| R-134a | 1.22 | 49 | 0.41 | 15.2 | 84 | -27 |
| R-22 | 1.32 | 107 | 0.85 | 22.2 | 120 | -41 |

In Table 1, the refrigerants are referred to as follows.

R-32: difluoromethane
R-125: pentafluoroethane
R-134a: 1,1,1,2-tetrafluoroethane
R-22: chlorodifluoromethane

Table 1 shows that refrigerants such as R-502, R-22 and R-32, conventionally used for low-temperature refrigerators, involve the discharge of gas at a high temperature, thus encountering difficulty in use in terms of thermal stability. R-125 is low in coefficiency of performance, and R-134a is poor in cooling capacity.

In contrast, it is clear that R-143a used in the present invention is the best balanced in properties and has excellent properties, compared with other refrigerants as a whole.

## Claims

1. A refrigerant for low-temperature refrigerators which comprises 1,1,1-trifluoroethane.

2. A refrigerator using a refrigerant having an evaporating temperature of - 30 to - 60°C therein, the refrigerator being characterized in that the refrigerant comprises 1,1,1-trifluoroethane.

3. A refrigerating method which is carried out with use of a refrigerator using a refrigerant having an evaporating temperature of - 30 to - 60°C, the method being characterized in that the refrigerant comprises 1,1,1-trifluoroethane.